# EUROPÄISCHE PATENTSCHRIFT

(11) **EP 2 473 360 B1**
(45) Veröffentlichungstag und Bekanntmachung des Hinweises auf die Patenterteilung: **25.12.2013**
(21) Anmeldenummer: 10747058.5
(22) Anmeldetag: 30.08.2010
(51) Int. Cl.: B60B 19/14, B60B 33/08

(54) **ROLLELEMENT ZUM ALLSEITIGEN VERFAHREN EINES FAHRZEUGS SOWIE FAHRZEUG MIT EINEM SOLCHEN ROLLELEMENT**
ROLLING ELEMENT FOR THE POLYDIMENSIONAL MOVEMENT OF A VEHICLE AND VEHICLE COMPRISING SUCH A ROLLING ELEMENT
GALET POUR LE DÉPLACEMENT EN TOUS SENS D'UN VÉHICULE ET VÉHICULE MUNI D'UN TEL GALET

(30) Priorität: 31.08.2009 CH 13472009
(43) Veröffentlichungstag der Anmeldung: 11.07.2012
(73) Patentinhaber: Alstom Technology Ltd, 5400 Baden (CH)
(72) Erfinder: MOSER, Roland, Richard, CH-8005 Zürich (CH); ERNI, Josef, CH-8400 Winterthur (CH)
(86) Internationale Anmeldenummer: PCT/EP2010/062649
(87) Internationale Veröffentlichungsnummer: WO 2011/023820

(56) Entgegenhaltungen:
- DE-A1- 1 816 923
- DE-A1- 4 234 727
- JP-A- 7 215 003
- JP-A- 2000 016 004
- JP-A- 2000 025 408
- JP-A- 2008 044 477
- US-A- 3 456 281

## Beschreibung

### TECHNISCHES GEBIET

Die vorliegende Erfindung bezieht sich auf das Gebiet der Fahrzeuge. Sie betrifft ein Rollelement zum allseitigen Verfahren eines Fahrzeugs gemäss dem Oberbegriff des Anspruchs 1, sowie ein Fahrzeug mit einem solchen Rollelement.

### STAND DER TECHNIK

Bei der von Hand ausgeführten Standardmethode zur zerstörungsfreien Prüfung von Bauteilen aus dem Kraftwerksbereich, wie beispielsweise Turbinenschaufeln, Turbinengehäuse oder dgl., mittels Ultraschall oder elektromagnetisch arbeitenden Sensoren muss ein vorgegebenes Abtastmuster eingehalten bzw. nachgefahren werden. Die prüfende Person hält den entsprechenden Sensor in der Hand und fährt dann den interessieren Bereich des Bauteils ab. Ein typisches Abtastmuster überstreicht den zu prüfenden Bereich mäanderförmig.

Soll dieser Prozess mittels eines Roboters oder Scanners automatisiert werden, gibt es derzeit zwei Lösungen: Bei der einen Lösung wird ein seriell arbeitender Roboter, z.B. in Form eines Roboterarms, eingesetzt, an dessen freiem Ende der Sensor angebracht ist. Bei der anderen Lösung wird auf den zu prüfenden Bereich ein Rahmen aufgesetzt, in dem der Sensor nach Art eines X-Y-Schreibers in zwei zueinander orthogonale Richtungen unabhängig verfahrbar ist.

Ein seriell arbeitender Roboter ist nicht nur vom Platzbedarf und der Ausrüstung her sehr aufwändig, sondern muss auch zum Abtasten auf die räumliche Gestalt der Objektoberfläche eingestellt werden. Beim Scanner muss der Rahmen von vornherein an die Objektgeometrie angepasst sein, was zu einer sehr geringen Flexibilität im Einsatz führt.

Diese Nachteile könnten durch ein autonomes, kleines Roboterfahrzeug überwunden werden, das allseitig verfahrbar an der Oberfläche des zu untersuchenden Objektes haftet und den für die Prüfung vorgesehenen Sensor entlang einem einprogrammierten Abtastmuster über die Oberfläche führt. Für die allseitige Verfahrbarkeit wird dabei ein kugelartiges Rollelement benötigt, auf welchem das Fahrzeug gelagert ist. Gleichzeitig soll eine anziehende Kraft bereitgestellt werden, die das Fahrzeug an der Objektoberfläche hält. Hierbei könnten Magnetkräfte zum Einsatz kommen, da die zu prüfenden Objekte meist aus ferromagnetischem Material bestehen.

Die Druckschrift JP 2000016004 offenbart eine achsenlose Laufrollen mit den Merkmalen des Oberbegriffs des Auspruchs 1, die insbesondere für Massagezwecke eingesetzt werden soll, bei der ein Rad von kugelförmiger Gestalt aus Eisen als magnetischem Material in eine Öffnung eines ringförmigen Magneten eingesetzt ist. Das kugelförmige Rad wird im Magneten (magnetisch) gehalten und rotiert weich, ohne zu entgleisen. Eine solche Laufrolle ist jedoch nicht geeignet, ein damit ausgestattetes Fahrzeug in jeder Lage auf einer magnetisierbaren Unterlage magnetisch zu halten.

Dasselbe gilt auch für die Rollvorrichtung für Möbelbeine der Druckschrift DE 18 16 923 Hier ist im unteren offenen Ende eines Möbelbeines eine aus dem Rohr herausragende Kugel angeordnet. Die Kugel lagert im Inneren des Beines in einer Fassung, die aus einem Kunststoff besteht. Die Kugel hat einen Stahlkern, der mit einem Gummimantel umhüllt ist. Zwischen der Kugel und der Fassung sind kleine Stahlkugeln angeordnet. Oberhalb der Fassung befindet sich ein scheibenförmiger Einsatz, der als Widerlager für die Fassung dient. Der Einsatz enthält an seiner Unterseite einen Permanentmagneten. Da der Kugelkern sowie die Kugeln auf die magnetischen Kräfte des Permanentmagneten ansprechen, können die Kugeln nicht nach unten herausfallen. Auch hier ist dem Fachmann sofort klar, dass der Permanentmagnet in keiner Weise geeignet ist, dass Möbelbein in jeder Lage auf dem Boden zu halten.

Auch die Druckschrift US 3,456,281 offenbart (Anspruch 8) eine Kugelrolle, bei der die Kugel ein Metall unter ihre Oberfläche umfasst und durch einen Magneten in ihrer Fassung gehalten wird. Auch hier dient der Magnet lediglich dazu, die kugelförmige Rolle am Herausfallen aus ihrer Halterung zu hindern, nicht jedoch dazu, das Rollelement insgesamt auf einer magnetisierbaren Unterlage zu halten.

Die Druckschrift DE 42 34 727 schliesslich beschäftigt sich allgemein mit dem Antrieb von Kugelrollen.

### DARSTELLUNG DER ERFINDUNG

Es ist daher eine Aufgabe der Erfindung, ein Rollelement zum allseitigen Verfahren eines Fahrzeugs auf einer Magnete anziehenden Unterlage zu schaffen, welches die genannten Bedingungen erfüllt, einfach und kompakt aufgebaut ist und sich aufgrund seiner Robustheit für den Einsatz unter schwierigen Bedingungen eignet.

Die Aufgabe wird durch die Gesamtheit der Merkmale des Anspruchs 1 gelöst. Wichtig für die Erfindung ist, dass das Rollelement ein kugelförmiges Element und wenigstens einen Permanentmagneten umfasst, und dass das kugelförmige Element den wenigstens einen Permanentmagneten derart trägt, dass der wenigstens eine Permanentmagnet seine räumliche Orientierung beibehält, wenn das kugelförmige Element auf der Unterlage abrollt, und dass das kugelförmige Element durch die magnetische Wechselwirkung des wenigstens einen Permanentmagneten auf der Unterlage anliegend gehalten wird.

Eine Ausgestaltung der Erfindung ist dadurch gekennzeichnet, dass das kugelförmige Element eine Kugel ist und im Inneren des wenigstens einen Permanentmagneten allseitig drehbar gelagert ist.

Insbesondere kann dabei der wenigstens eine Permanentmagnet als die Kugel umgebender Hohlzylinder ausgebildet sein.

Eine andere Ausgestaltung der Erfindung zeichnet sich dadurch aus, dass das kugelförmige Element eine Kugelschale ist, und dass der wenigstens eine Permanentmagnet im Inneren der Kugelschale allseitig drehbar gelagert ist.

Vorzugsweise besteht die Kugelschale aus einem nicht-ferromagnetischen Material.

Weiterhin kann mit Vorteil der wenigstens eine Permanentmagnet in einer Kugel aus nicht-ferromagnetischem Material eingebettet sein, welche in der Kugelschale allseitig drehbar gelagert ist.

Um die notwendige Beweglichkeit zu erreichen, ist zwischen der Kugelschale und der den wenigstens einen Permanentmagneten umschliessenden Kugel ein Zwischenraum vorgesehen.

Der Zwischenraum kann mit einem Gas, insbesondere Luft, gefüllt sein.

Der Zwischenraum kann aber auch mit einem die Reibung zwischen Kugel und Kugelschale herabsetzenden Gleitmittel gefüllt sein.

Des weiteren kann der wenigstens eine Permanentmagnet zylindrisch ausgebildet sein.

Eine andere Ausgestaltung der Erfindung ist dadurch gekennzeichnet, dass das Rollelement durch ein an der Aussenfläche des kugelförmigen Elements anliegendes Antriebsrad antreibbar ist.

Das erfindungsgemässe Fahrzeug zum allseitigen Verfahren auf einer Magnete anziehenden Unterlage ist mit wenigstens einem erfindungsgemässen Rollelement ausgerüstet.

Insbesondere bewegt sich das Fahrzeug auf mehreren der Rollelemente.

Vorzugsweise sind drei Rollelemente vorgesehen, die in einem Dreieck angeordnet sind.

Wenigstens einem der Rollelemente ist dabei ein Antrieb zugeordnet, durch welchen das Rollelement antreibbar ist.

Besonders vorteilhaft ist es, wenn die mehreren Rollelemente durch eine gemeinsame Plattform miteinander verbunden sind, und wenn unterhalb und/oder oberhalb der Plattform Einrichtungen für den Einsatz des Fahrzeugs angeordnet sind.

Vorzugsweise umfassen die Einrichtungen für den Einsatz des Fahrzeugs eine Steuerung zum selbsttätigen Steuern der Bewegung des Fahrzeugs.

Gemäss einer bevorzugten Ausgestaltung ist das Fahrzeug als Prüfroboter, insbesondere zur zerstörungsfreien Prüfung eines aus ferromagnetischem Material bestehenden Prüflings, insbesondere eines Schaufelblatts eines Verdichters oder einer Turbine, ausgebildet, und trägt eine entsprechende Prüfeinrichtung.

Selbstverständlich können das Rollelement und das damit ausgerüstete Fahrzeug im Rahmen der Erfindung auch zu anderen Zwecken eingesetzt werden.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: im Schnitt ein erstes Ausführungsbeispiel eines Rollelements nach der Erfindung, bei dem ein Permanentmagnet im Inneren einer Kugelschale angeordnet ist, und bei dem zusätzlich ein Antrieb schematisch angedeutet ist;
- Fig. 2: in einer perspektivischen Seitenansicht ein mit drei Rollelementen in Dreiecksanordnung ausgerüstetes autonomes Fahrzeug gemäss einem anderen Ausführungsbeispiel der Erfindung;
- Fig. 3: in der Seitenansicht das Fahrzeug aus Fig. 2 mit verschiedenen Einrichtungen zu seinem Betrieb;
- Fig. 4: im Schnitt ein zweites Ausführungsbeispiel eines Rollelements nach der Erfindung, bei dem eine Kugel im Inneren eines Permanentmagneten angeordnet ist; und
- Fig. 5: die Anwendung eines Fahrzeugs nach Fig. 3 zur Prüfung eines Schaufelblattes einer Turbinen- oder Verdichterschaufel.

### WEGE ZUR AUSFÜHRUNG DER ERFINDUNG

Um ein Fahrzeug in eine beliebige Richtung bewegen zu können und es auch um die eigene Achse drehen zu können, ist es möglich, das Fahrzeug auf Kugeln zu lagern. Unter Fahrzeug wird dabei generell ein Objekt nahezu beliebiger Grösse verstanden, das auf einer Unterlage verfahrbar sein soll. Im nachfolgenden Anwendungsbeispiel ist das Fahrzeug ein autonomer Roboter von der Grösse einer Hand, der zur zerstörungsfreien Prüfung auf einem im Betrieb belasteten Bauteil wie z.B. einer Turbinenschaufel die Oberfläche abfahren soll.

Da es häufig vorkommt, dass der die Unterlage bildende Körper aus einem ferromagnetischen Material besteht, soll das Fahrzeug unter Ausnutzung magnetischer Kräfte beim Verfahren auf der Oberfläche gehalten werden. Weil der Magnetismus immer in Form von Dipolen auftritt, ist eine gleichförmige Magnetisierung einer Kugel physikalisch nicht möglich, so dass zur Lagerung des Fahrzeugs eingesetzte Kugeln nicht gleichzeitig auch die anziehende Wirkung auf die ferromagnetische Unterlage bereitstellen können.

Im Rahmen der Erfindung wird daher als für allseitige Bewegungen geeignetes, eine magnetische Haftung bewirkendes "Rad" eines Fahrzeugs ein Rollelement vorgeschlagen.

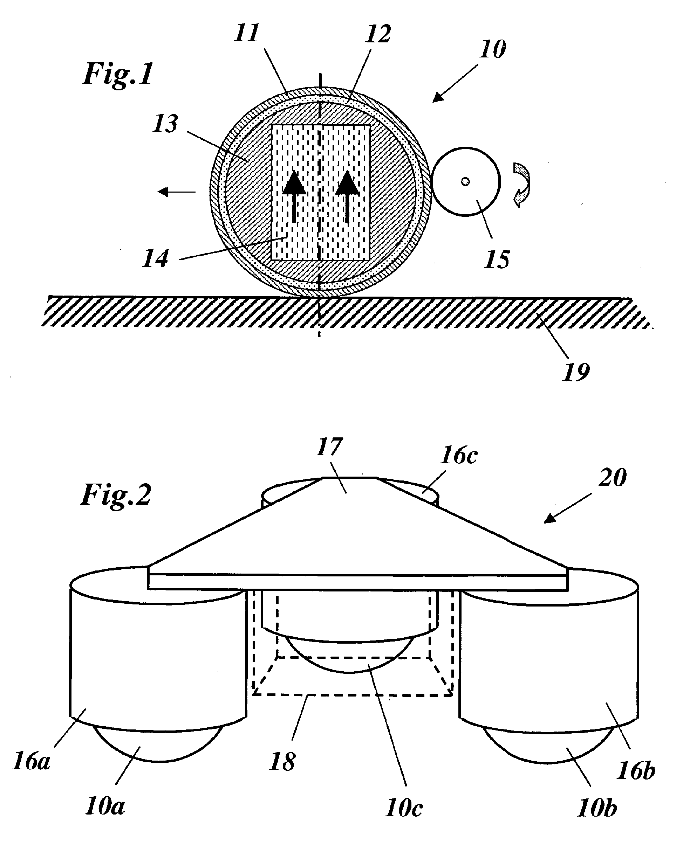

Fig. 1 zeigt im Schnitt ein erstes Ausführungsbeispiel eines solchen Rollelements 10 nach der Erfindung. Ein (vorzugsweise zylindrischer) Permanentmagnet 14 ist innerhalb einer Kugel 13 aus nicht-ferromagnetischem Material angeordnet (z.B. eingebettet). Die Kugel 13 mit dem darin befindlichen Permanentmagneten 14 ist beliebig drehbar in einer Kugelschale 11 aus nicht-ferromagnetischem Material untergebracht. Zwischen der Kugel 13 und der sie umgebenden Kugelschale 11 ist ein (näherungsweise kugelschalenförmiger) Zwischenraum 12 vorgesehen, der mit einem Gas, insbesondere Luft, oder aber auch mit einem Gleitmittel wie z.B. Öl oder dgl. gefüllt ist, um eine leichte Drehbarkeit der Kugelschale 11 gegenüber der Kugel 13 zu gewährleisten.

Wenn das Rollelement 10 - wie in Fig. 1 gezeigt - auf einer Unterlage 19 aus ferromagnetischem Material (z.B. einer Turbinenwelle, einem Rohr, einer Turbinenschaufel, einem Tank oder dgl. Bauelement aus dem Kraftwerksbereich) aufliegt, halten die vom Permanentmagnet 14 ausgeübten magnetischen Kräfte das Rollelement 10 auf der Oberfläche der Unterlage 19 fest. Die magnetische Anziehung bleicht gleich, auch wenn sich das Rollelement 10 mit der Kugelschale 11 rollend auf der Unterlage 19 fortbewegt, da sich der Permanentmagnet 14 aufgrund der freien Drehbarkeit der Kugel 13 innerhalb der Kugelschale 11 immer wieder mit der Zylinderachse senkrecht zur Oberfläche der Unterlage 19 ausrichte, und der Abstand zur Unterlage 19 gleich bleibt.

Für die Bewegung des Rollelements, 10 auf der Unterlage 19 bestehen drei Freiheitsgrade: Zwei orthogonale (x,y-)Richtungen parallel zur Oberfläche der Unterlage 19, sowie eine Drehung um die Zylinderachse des Permanentmagneten 14.

Das Rollelement 10 der Fig. 1 kann als passives "Rad" eines Fahrzeugs eingesetzt werden, um eine allseitige Beweglichkeit des Fahrzeugs und eine magnetische Haftung an der Unterlage 19 zu gewährleisten. Es kann aber auch als Antriebselement eingesetzt werden. In diesem Fall können ein oder mehrere Antriebsräder 15 vorgesehen werden, die per Reibung an der Oberfläche der Kugelschale 11 abrollen und diese in eine oder mehrere Richtungen bewegen, wie dies in Fig. 1 für den Fall eines einzelnen Antriebsrads 15 schematisch gezeigt ist.

Wenn ein oder mehrere Rollelemente 10 an einem Fahrzeug angeordnet werden, müssen dafür entsprechende Lager vorgesehen sein. Ein besonders einfaches Beispiel eines solchen Fahrzeugs in Form eines autonomen Prüfroboters ist in Fig. 2 in perspektivischer Seitenansicht wiedergegeben. Beim Prüfroboter 20 der Fig. 2 sind drei Rollelemente 10a, 10b und 10c der in Fig. 1 gezeigten Art in einem Dreieck angeordnet, um eine stabile Auflage des Prüfroboters auf der Oberfläche des zu untersuchenden Bauelements sicherzustellen. Jedes der Rollelemente 10a, 10b und 10c ist in einem zugehörigen Lager 16a, 16b und 16c reibungsarm und allseitig drehbar gelagert. Die Lager 16a, 16b und 16c mit den zugehörigen Rollelementen 10a, 10b und 10c sind an den Ecken einer dreieckigen Plattform 17 befestigt, welche die für den autonomen Betrieb des Prüfroboters 20 notwendigen Einrichtungen aufnimmt. Hierfür steht einerseits die Oberseite der Plattform 17 zur Verfügung. Auf der Unterseite der Plattform 17 ergibt sich zwischen den Lagern 16a, 16b und 16c ein weiterer Nutzraum 18, der insbesondere zur Unterbringung der auf die Unterlage 19 gerichteten Prüfeinrichtungen benutzt werden kann.

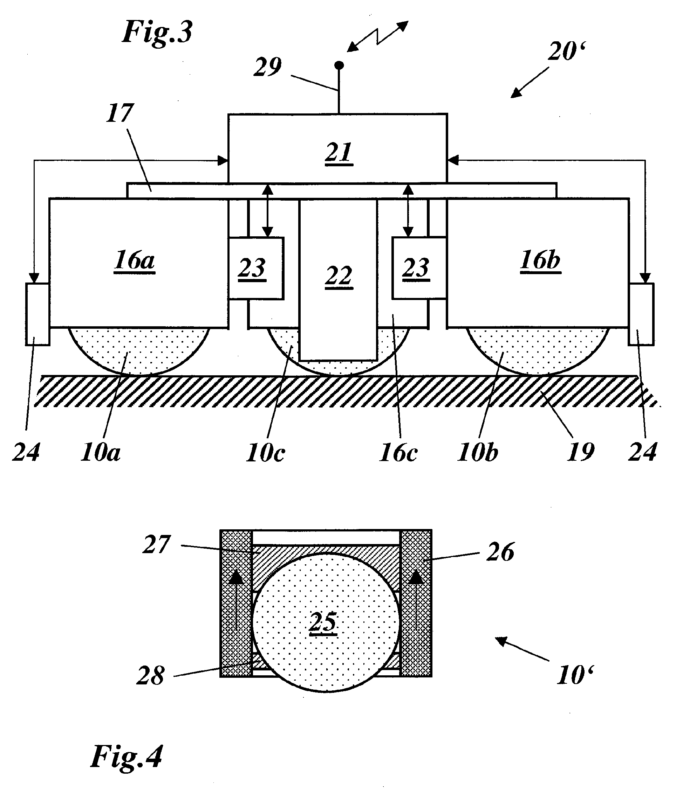

Ein beispielhaft ausgerüsteter Prüfroboter 20' ist in Fig. 3 in Seitenansicht gezeigt. Auf der Plattform 17 ist hier eine Steuerung 21 angeordnet, die über eine Antenne 29 drahtlos mit einem externen Steuergerät kommunizieren kann und sowohl die Bewegung des Fahrzeugs als auch den Ablauf der Prüfprozesse steuert und überwacht. Für den Antrieb der Rollelemente 10a, 10b und 10c sind entsprechende (elektrische) Antriebe 23 vorgesehen, die mit der Steuerung 21 verbunden sind. Um die Position des Prüfroboters 20' schlupffrei bestimmen zu können, sind ein oder mehrere Positionsgeber 24 am Fahrzeug angebracht, die beispielsweise optisch die Bewegung relativ zur Unterlage 19 bestimmen und an entsprechende Signale an die Steuerung 21 abgeben. Unterhalb der Plattform 17 ist auch eine mit Ultraschall oder elektromagnetisch arbeitende Prüfeinrichtung 22 angeordnet, mit der die Unterlage 19 bzw. das zu prüfende Bauelement zerstörungsfrei abgetastet werden kann.

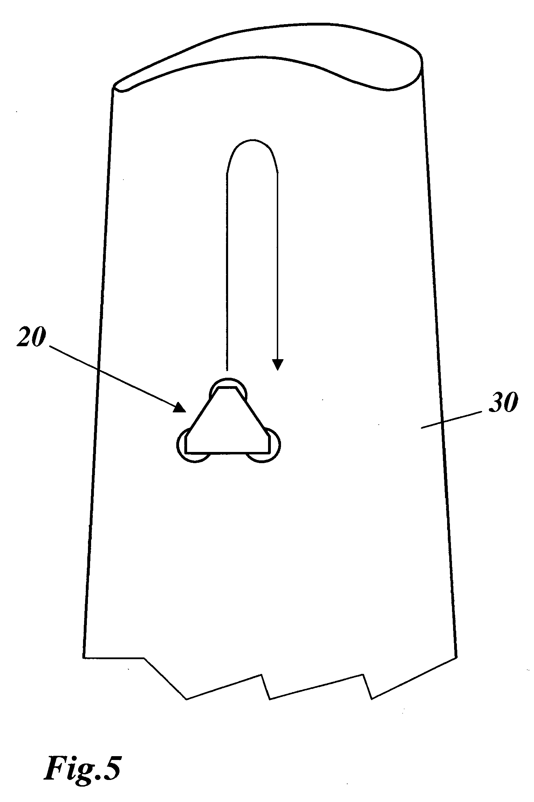

Ein solcher Prüfroboter 20 bzw. 20' wird beispielsweise gemäss Fig. 5 auf das Schaufelblatt 30 einer Turbinenschaufel gesetzt und fährt, einem vorgegebenen Bewegungsmuster folgend, die Oberfläche des Schaufelblattes 30 ab, um die Schaufel auf Risse oder andere Unregelmässigkeiten zu untersuchen. Eingesetzt werden dabei Rollelemente 10a, 10b und 10c der in Fig. 1 gezeigten Art mit einem Aussendurchmesser von 20 mm, mit denen - beim Einsatz geeigneter Permanentmagneten - Haftkräfte von bis zu 30 N erricht werden können. Diese Kraft reicht aus, um das Gewicht des "nackten" Prüfroboters von 180 g und die darauf angeordneten Einrichtungen mit einem Gewicht von 1 kg zu halten.

Es ist im Rahmen der Erfindung denkbar, anstelle des in Fig. 1 gezeigten Aufbaus der Rollelemente einen umgekehrten Aufbau zu wählen, bei der der Permanentmagnet das kugelförmige Element aussen umgibt. Ein solcher alternativer Aufbau ist in Fig. 4 gezeigt. Hierbei ist in dem Rollelement 10' eine Kugel 25 in einem hohlzylindrischen Permanentmagneten 26 mittels geeigneter Lagerelemente 27, 28 drehbar gelagert. Die Kugel 25 steht nach unten ausreichend weit vor, um auf der Unterlage 19 frei abrollen zu können. Obgleich die Lage des Permanentmagneten 26 beim freien Rollelement 10' nicht stabil ist, wird sie, wenn das Rollelement 10' entsprechend Fig. 2 in ein Fahrzeug eingebaut wird, durch die Plattform 17 fixiert.

Insgesamt ergibt sich mit der Erfindung über das einzelne Rollelement hinaus ein in alle Richtungen beweglicher Prüfroboter, der die folgenden Eigenschaften und Vorteile aufweist:
- Als omnidirektionaler Scanner ist der Prüfroboter eine Voraussetzung für die Automatisierung der bisher manuell erfolgten Inspektionen.
- Die Prüfroboter sind klein, leicht und flexibel und universell, d.h. bei vielen verschiedenen Geometrien, einsetzbar.
- Sie sind leicht transportierbar und erleichtern wesentlich Prüfungen "vor Ort".
- Sie lassen sich in den meisten Fällen einsetzen, da sehr viele Bauteile aus ferromagnetischem Material bestehen

Die erfindungsgemässen Rollelemente lassen sich aber auch in Fahrzeugen einsetzen, die an unzugänglichen Stellen nicht nur Prüfungen, sondern auch Arbeiten (Reinigung, Ausbessern etc.) durchführen sollen.

### BEZUGSZEICHENLISTE

- 10,10': Rollelement
- 11: Kugelschale
- 12: Zwischenraum
- 13: Kugel (nicht-ferromagnetisch)
- 14: Permanentmagnet (z.B. zylindrisch)
- 15: Antriebsrad
- 16a,b,c: Lager (Rollelement)
- 17: Plattform
- 18: Nutzraum
- 19: Unterlage
- 20,20': Prüfroboter (allseitig verfahrbar)
- 21: Steuerung
- 22: Prüfeinrichtung
- 23: Antrieb
- 24: Positionsgeber
- 25: Kugel
- 26: Permanentmagnet (z.B. hohlzylindrisch)
- 27,28: Lagerelement
- 29: Antenne
- 30: Schaufelblatt (Turbine)

## Patentansprüche

1. Rollelement (10, 10') zum allseitigen Verfahren eines Fahrzeugs (20, 20') auf einer Magnete anziehenden Unterlage (19), welches Rollelement (10, 10') ein kugelförmiges Element (11, 25) und wenigstens einen Permanentmagneten (14, 26) umfasst, wobei das kugelförmige Element (11, 25) den wenigstens einen Permanentmagneten (14, 26) derart trägt, dass der wenigstens eine Permanentmagnet (14, 26) seine räumliche Orientierung beibehält, wenn das kugelförmige Element (11, 25) auf der Unterlage (19) abrollt, **dadurch gekennzeichnet, dass** das kugelförmige Element (11, 25) durch die magnetische Wechselwirkung des wenigstens einen Permanentmagneten (14, 26) mit der Unterlage (19) auf der Unterlage (19) anliegend gehalten wird.

2. Rollelement nach Anspruch 1, **dadurch gekennzeichnet, dass** das kugelförmige Element eine Kugel (25) ist und im Inneren des wenigstens einen Permanentmagneten (26) allseitig drehbar gelagert ist.

3. Rollelement nach Anspruch 2, **dadurch gekennzeichnet, dass** der wenigstens eine Permanentmagnet (26) als die Kugel (25) umgebender Hohlzylinder ausgebildet ist.

4. Rollelement nach Anspruch 1, **dadurch gekennzeichnet, dass** das kugelförmige Element eine Kugelschale (11) ist, und dass der wenigstens eine Permanentmagnet (14) im Inneren der Kugelschale (11) allseitig drehbar gelagert ist.

5. Rollelement nach Anspruch 4, **dadurch gekennzeichnet, dass** die Kugelschale (11) aus einem nicht-ferromagnetischen Material besteht.

6. Rollelement nach Anspruch 4 oder 5, **dadurch gekennzeichnet, dass** der wenigstens eine Permanentmagnet (14) in einer Kugel (13) aus nicht-ferromagnetischem Material eingebettet ist, welche in der Kugelschale (11) allseitig drehbar gelagert ist.

7. Rollelement nach Anspruch 6, **dadurch gekennzeichnet, dass** zwischen der Kugelschale (11) und der den wenigstens einen Permanentmagneten (14) umschliessenden Kugel (13) ein Zwischenraum (12) vorgesehen ist.

8. Rollelement nach Anspruch 7, **dadurch gekennzeichnet, dass** der Zwischenraum (12) mit einem Gas, insbesondere Luft, gefüllt ist.

9. Rollelement nach Anspruch 7, **dadurch gekennzeichnet, dass** der Zwischenraum (12) mit einem die Reibung zwischen Kugel (13) und Kugelschale (11) herabsetzenden Gleitmittel gefüllt ist.

10. Rollelement nach einem der Ansprüche 6 bis 9, **dadurch gekennzeichnet, dass** der wenigstens eine Permanentmagnet (14) zylindrisch ausgebildet ist.

11. Rollelement nach einem der Ansprüche 1 bis 10, **dadurch gekennzeichnet, dass** das Rollelement (10) durch ein an der Aussenfläche des kugelförmigen Elements (11) anliegendes Antriebsrad (15) antreibbar ist.

12. Fahrzeug (20, 20') zum allseitigen Verfahren auf einer Magnete anziehenden Unterlage (19), **dadurch gekennzeichnet, dass** das Fahrzeug mit wenigstens einem Rollelement (10, 10') nach einem der Ansprüche 1 bis 11 ausgerüstet ist.

13. Fahrzeug nach Anspruch 12, **dadurch gekennzeichnet, dass** sich das Fahrzeug auf mehreren der Rollelemente (10, 10'; 10a, 10b, 10c) bewegt.

14. Fahrzeug nach Anspruch 13, **dadurch gekennzeichnet, dass** drei Rollelemente (10a, 10b, 10c) vorgesehen sind, und dass die drei Rollelemente (10a, 10b, 10c) in einem Dreieck angeordnet sind.

15. Fahrzeug nach Anspruch 13 oder 14, **dadurch gekennzeichnet, dass** wenigstens einem der Rollelemente (10, 10'; 10a, 10b, 10c) ein Antrieb (23) zugeordnet ist, durch welchen das Rollelement antreibbar ist.

16. Fahrzeug nach einem der Ansprüche 13 bis 15, **dadurch gekennzeichnet, dass** die mehreren Rollelemente (10a, 10b, 10c) durch eine gemeinsame Plattform (17) miteinander verbunden sind, und dass unterhalb und/oder oberhalb der Plattform (17) Einrichtungen (21, 22) für den Einsatz des Fahrzeugs (20, 20') angeordnet sind.

17. Fahrzeug nach Anspruch 16, **dadurch gekennzeichnet, dass** die Einrichtungen für den Einsatz des Fahrzeugs (20, 20') eine Steuerung (21) zum selbsttätigen Steuern der Bewegung des Fahrzeugs (20, 20') umfassen.

18. Fahrzeug nach Anspruch 16 oder 17, **dadurch gekennzeichnet, dass** das Fahrzeug (20') als Prüfroboter, insbesondere zur zerstörungsfreien Prüfung eines aus ferromagnetischem Material bestehenden Prüflings, insbesondere eines Schaufelblatts eines Verdichters oder einer Turbine, ausgebildet ist, und eine entsprechende Prüfeinrichtung (22) trägt.

## Claims

1. Rolling element (10, 10') for the polydirectional travel of a vehicle (20, 20') on a magnetically attractive underlying surface (19), which rolling element (10, 10') comprises a spherical element (11, 25) and at least one permanent magnet (14, 26), wherein the spherical element (11, 25) supports the at least one permanent magnet (14, 26) in such a way that the at least one permanent magnet (14, 26) maintains its spatial orientation when the spherical element (11, 25) rolls on the underlying surface (19), **characterized in that** the spherical element (11, 25) is held in contact against the underlying surface (19) by the magnetic interaction of the at least one permanent magnet (14, 26) with the underlying surface (19).

2. Rolling element according to Claim 1, **characterized in that** the spherical element is a ball (25) and is mounted, so as to be polydirectionally rotatable, in the interior of the at least one permanent magnet (26).

3. Rolling element according to Claim 2, **characterized in that** the at least one permanent magnet (26) is formed as a hollow cylinder which surrounds the ball (25).

4. Rolling element according to Claim 1, **characterized in that** the spherical element is a spherical shell (11), and **in that** the at least one permanent magnet (14) is mounted, so as to be polydirectionally rotatable, in the interior of the spherical shell (11).

5. Rolling element according to Claim 4, **characterized in that** the spherical shell (11) is composed of a non-ferromagnetic material.

6. Rolling element according to Claim 4 or 5, **characterized in that** the at least one permanent magnet (14) is embedded in a ball (13) which is composed of non-ferromagnetic material and which is mounted, so as to be polydirectionally rotatable, in the spherical shell (11).

7. Rolling element according to Claim 6, **characterized in that** an intermediate space (12) is provided between the spherical shell (11) and the ball (13) which encloses the at least one permanent magnet (14).

8. Rolling element according to Claim 7, **characterized in that** the intermediate space (12) is filled with a gas, in particular air.

9. Rolling element according to Claim 7, **characterized in that** the intermediate space (12) is filled with an anti-friction agent which reduces the friction between the ball (13) and spherical shell (11).

10. Rolling element according to one of Claims 6 to 9, **characterized in that** the at least one permanent magnet (14) is of cylindrical design.

11. Rolling element according to one of Claims 1 to 10, **characterized in that** Rollingelement (10) can be driven by means of a drive wheel (15) which bears against the outer surface of the spherical element (11).

12. Vehicle (20, 20') for polydirectional travel on a magnetically attractive underlying surface (19), **characterized in that** Vehicle is equipped with at least one rolling element (10, 10') according to one of Claims 1 to 11.

13. Vehicle according to Claim 12, **characterized in that** Vehicle moves on a plurality of Rollingelements (10, 10'; 10a, 10b, 10c).

14. Vehicle according to Claim 13, **characterized in that** three rolling elements (10a, 10b, 10c) are provided, and **in that** the three rolling elements (10a, 10b, 10c) are arranged in a triangle.

15. Vehicle according to Claim 13 or 14, **characterized in that** at least one of Rollingelements (10, 10'; 10a, 10b, 10c) is assigned a drive (23) by means of which Rollingelement can be driven.

16. Vehicle according to one of Claims 13 to 15, **characterized in that** the plurality of rolling elements (10a, 10b, 10c) are connected to one another by a common platform (17), and **in that** devices (21, 22) for the use of Vehicle (20, 20') are arranged below and/or above the platform (17).

17. Vehicle according to Claim 16, **characterized in that** the devices for the use of Vehicle (20, 20') comprise a controller (21) for automatically controlling the movement of Vehicle (20, 20').

18. Vehicle according to Claim 16 or 17, **characterized in that** Vehicle (20') is designed as a testing robot, in particular for the non-destructive testing of a test specimen composed of ferromagnetic material, in particular of a blade airfoil of a compressor or of a turbine, and supports a corresponding testing device (22).

## Revendications

1. Elément de roulement (10, 10') pour le déplacement en tous sens d'un véhicule (20, 20') sur un support (19) attirant des aimants, lequel élément de roulement (10, 10') comprend un élément de forme sphérique (11, 25) et au moins un aimant permanent (14, 26), l'élément de forme sphérique (11, 25) supportant l'au moins un aimant permanent (14, 26) de telle sorte que l'au moins un aimant permanent (14, 26) conserve son orientation spatiale lorsque l'élément de forme sphérique (11, 25) roule sur le support (19), **caractérisé en ce que** l'élément de forme sphérique (11, 25) est maintenu en appui sur le support (19) par l'interaction magnétique de l'au moins un aimant permanent (14, 26) avec le support (19).

2. Elément de roulement selon la revendication 1, **caractérisé en ce que** l'élément de forme sphérique est une sphère (25) et est monté de manière à pouvoir tourner en tous sens à l'intérieur de l'au moins un aimant permanent (26).

3. Elément de roulement selon la revendication 2, **caractérisé en ce que** l'au moins un aimant permanent (26) est réalisé sous forme de cylindre creux entourant la sphère (25).

4. Elément de roulement selon la revendication 1, **caractérisé en ce que** l'élément de forme sphérique est une coque sphérique (11), et **en ce que** l'au moins un aimant permanent (14) est monté de manière à pouvoir tourner en tous sens à l'intérieur de la coque sphérique (11).

5. Elément de roulement selon la revendication 4, **caractérisé en ce que** la coque sphérique (11) se compose d'un matériau non ferromagnétique.

6. Elément de roulement selon la revendication 4 ou 5, **caractérisé en ce que** l'au moins un aimant permanent (14) est noyé dans une sphère (13) en matériau non ferromagnétique qui est montée de manière à pouvoir tourner en tous sens dans la coque sphérique (11).

7. Elément de roulement selon la revendication 6, **caractérisé en ce qu'**entre la coque sphérique (11) et la sphère (13) entourant l'au moins un aimant permanent (14) est prévu un espace intermédiaire (12).

8. Elément de roulement selon la revendication 7, **caractérisé en ce que** l'espace intermédiaire (12) est rempli d'un gaz, notamment d'air.

9. Elément de roulement selon la revendication 7, **caractérisé en ce que** l'espace intermédiaire (12) est rempli d'un lubrifiant diminuant le frottement entre la sphère (13) et la coque sphérique (11).

10. Elément de roulement selon l'une quelconque des revendications 6 à 9, **caractérisé en ce que** l'au moins un aimant permanent (14) est réalisé sous forme cylindrique.

11. Elément de roulement selon l'une quelconque des revendications 1 à 10, **caractérisé en ce que** l'élément de roulement (10) peut être entraîné par une roue d'entraînement (15) s'appliquant contre la surface extérieure de l'élément de forme sphérique (11).

12. Véhicule (20, 20') pour le déplacement en tous sens sur un support (19) attirant des aimants, **caractérisé en ce que** le véhicule est muni d'au moins un élément de roulement (10, 10') selon l'une quelconque des revendications 1 à 11.

13. Véhicule selon la revendication 12, **caractérisé en ce que** le véhicule se déplace sur plusieurs des éléments de roulement (10, 10' ; 10a, 10b, 10c).

14. Véhicule selon la revendication 13, **caractérisé en ce que** trois éléments de roulement (10a, 10b, 10c) sont prévus et **en ce que** les trois éléments de roulement (10a, 10b, 10c) sont disposés en triangle.

15. Véhicule selon la revendication 13 ou 14, **caractérisé en ce qu'**au moins l'un des éléments de roulement (10, 10' ; 10a, 10b, 10c) est associé à un entraînement (23) qui permet d'entraîner l'élément de roulement.

16. Véhicule selon l'une quelconque des revendications 13 à 15, **caractérisé en ce que** les plusieurs éléments de roulement (10a, 10b, 10c) sont connectés les uns aux autres par une plate-forme commune (17), et **en ce qu'**en dessous et/ou au-dessus de la plate-forme (17) sont disposés des dispositifs (21, 22) pour l'utilisation du véhicule (20, 20').

17. Véhicule selon la revendication 16, **caractérisé en ce que** les dispositifs pour l'utilisation du véhicule (20, 20') comprennent une commande (21) pour la commande automatique du déplacement du véhicule (20, 20').

18. Véhicule selon la revendication 16 ou 17, **caractérisé en ce que** le véhicule (20') est réalisé sous forme de robot de contrôle, en particulier pour le contrôle non destructif d'un échantillon constitué de matériau ferromagnétique, en particulier d'une aube de compresseur ou de turbine, et porte un dispositif de contrôle correspondant (22).
